# DEMANDE DE BREVET EUROPEEN

(11) **EP 1 376 364 A1**
(43) Date de publication de la demande: **02.01.2004**
(21) Numéro de dépôt: 03291536.5
(22) Date de dépôt: 23.06.2003
(51) Int. Cl.: G06F 11/34

(54) **Procédé de réglage d'au moins un paramètre de configuration d'une application**

(30) Priorité: 27.06.2002 FR 0208275
(71) Demandeur: FRANCE TELECOM SA, 75015 Paris (FR)
(72) Inventeur: Bechet, Guy, 35700 Rennes (FR); Gerard, Christian, 35530 Noyal-sur-Vilaine (FR); Hias, Michel, 35510 Cesson-Sevigne (FR); Souquet, Alain, 35200 Rennes (FR)
(74) Mandataire: Maillet, Alain

(57) **Abrégé**

La présente invention concerne un procédé de réglage d'un paramètre de configuration d'une application, qui inclut :
. une étape 10 de sélection d'une valeur Pᵢ dudit paramètre,
. une étape 11 de simulation d'un fonctionnement de l'application dans une configuration résultant de la sélection de la valeur Pᵢ dudit paramètre, dans des conditions de charge LD prédéterminées de l'application,
. une étape 13 de mesure de performances MPᵢ de l'application dans ladite configuration,
. une étape 14 de comparaison des performances mesurées MPᵢ avec des performances prédéterminées PREF, et
. une étape 17 de réglage par variation dPᵢ de la valeur Pᵢ dudit paramètre en fonction d'un résultat de ladite comparaison.

L'invention permet une optimisation des performances d'une application, qui peut être opérée de façon automatique et sans mettre à contribution des utilisateurs de ladite application

## Description

La présente invention concerne un procédé de réglage d'au moins un paramètre de configuration d'une application.

Une application peut être constituée par un système d'exploitation, un serveur de réseau de type Internet, ou encore une base de données. Ces applications présentent généralement un ou plusieurs fichiers de configuration paramétrables au moyen d'une ou plusieurs variables appelées paramètres de configuration, une sélection d'une valeur particulière pour chaque paramètre ayant une influence déterminante sur des performances de l'application considérée. Il est ainsi souhaitable d'identifier la ou les valeurs du ou des paramètres de configuration qui confèrent à l'application les meilleures performances possibles lorsque ladite application est en fonctionnement, de manière à assurer une qualité de service optimale à des utilisateurs de ladite application.

Les procédés de réglage connus nécessitent une observation du comportement de l'application dans ses conditions de fonctionnement, c'est-à-dire lorsqu'elle a été rendue opérationnelle. Les performances réelles de l'application peuvent alors être mesurées, et la ou les valeurs du ou des paramètres de configuration sont alors usuellement ajustées manuellement, les effets produits par de tels ajustements pouvant être quantifiés, et conduire à de nouveaux ajustements jusqu'à ce que des performances optimales soient obtenues. Il va sans dire qu'au cours d'un tel processus d'ajustement manuel, les performances de l'application peuvent se trouver momentanément fortement dégradées, et sévèrement affecter la qualité de service procurée aux utilisateurs de l'application au détriment de la satisfaction desdits utilisateurs, ce qui peut être dommageable aux relations entre ces utilisateurs et un gestionnaire de l'application considérée, par exemple un fournisseur d'accès à un réseau de type Internet.

L'un des buts de l'invention est de proposer un procédé de réglage de paramètres de configuration grâce auquel les performances de l'application peuvent être optimisées sans pour autant qu'il soit nécessaire de recourir à une mise en fonctionnement réel de ladite application, c'est-à-dire sans que des utilisateurs de l'application n'aient à subir d'effets négatifs d'ajustements successifs desdits paramètres pouvant se traduire par une dégradation momentanée de la qualité de service à laquelle lesdits utilisateurs sont en droit de prétendre.

En effet, un procédé de réglage conforme au paragraphe introductif est caractérisé selon l'invention en ce qu'il inclut au moins :
. une étape de sélection d'une première valeur dudit paramètre,
. une étape de simulation d'un fonctionnement de l'application dans une première configuration résultant de la sélection de la première valeur dudit paramètre, dans des conditions de charge prédéterminées de l'application,
. une étape de mesure de performances de l'application dans ladite première configuration,
. une étape de comparaison des performances mesurées avec des valeurs de performance prédéterminées, et
. une étape de réglage par variation de la valeur dudit paramètre en fonction d'un résultat de ladite comparaison.

Grâce à l'invention, le fonctionnement de l'application peut être simulé à chaque fois qu'une nouvelle valeur du paramètre de configuration est sélectionnée, sans nécessiter une mise en fonctionnement réel de l'application. Si les étapes de mesure et de comparaison des performances révèlent que la valeur sélectionnée ne permet pas d'obtenir des performances optimales, la valeur sélectionnée pourra être modifiée, sans pour autant que l'analyse des effets du choix de cette valeur n'ait provoqué d'insatisfaction chez des utilisateurs de l'application, qui n'interviennent pas dans le procédé de réglage selon l'invention. De plus, il sera possible d'enchaîner de manière itérative un grand nombre de cycles constitués chacun par une étape de sélection, une étape de mesure, une étape de comparaison et une étape de réglage, sans intervention humaine d'aucune sorte, ce qui permet de réduire considérablement la durée d'exécution du procédé de réglage selon l'invention par rapport aux procédés connus.

Selon une première variante de l'invention, un procédé tel que décrit ci-dessus inclut en outre, insérées à la suite d'une première étape de réglage :
. une étape de simulation d'un fonctionnement de l'application dans une deuxième configuration résultant de la variation de la valeur dudit paramètre, dans les conditions de charge prédéterminées de l'application,
. une étape de mesure de performances de l'application dans ladite deuxième configuration,
. une étape de comparaison des performances mesurées dans ladite deuxième configuration avec les valeurs de performance prédéterminées, et
. une étape de réglage par variation de la valeur dudit paramètre en fonction d'un résultat de ladite comparaison, la variation dudit paramètre étant réalisée dans un sens dépendant d'un sens de variation de résultats de comparaisons successives.

Cette première variante permet, en quantifiant les effets de sélections successives de deux valeurs différentes d'un paramètre de configuration en référence à des performances prédéterminées qui constituent dans cette variante en quelque sorte un objectif à atteindre, d'identifier si la variation de la valeur dudit paramètre a permis de se rapprocher dudit objectif, et d'en déduire dans quel sens la prochaine variation doit être effectuée. Ceci permet d'organiser et donc de simplifier le processus de sélection de la valeur dudit paramètre dans le cadre d'une mise en oeuvre par cycles itératifs du procédé selon l'invention.

Selon une deuxième variante de l'invention, un procédé tel que décrit ci-dessus inclut en outre, insérées à la suite de l'étape de mesure de performances de l'application dans ladite première configuration :
- une étape de sélection d'une deuxième valeur dudit paramètre, et
- une étape de simulation d'un fonctionnement de l'application dans une deuxième configuration résultant de la sélection de la deuxième valeur dudit paramètre, dans les conditions de charge prédéterminées de l'application,
les valeurs de performances prédéterminées auxquels les performances mesurées dans la deuxième configuration doivent être comparées au cours de l'étape de comparaison étant matérialisées par les performances mesurées dans la première configuration.

Selon cette deuxième variante de l'invention, les performances mesurées ne sont pas comparées à des valeurs fixes de performances optimales constituant un objectif à atteindre, ce qui nécessite de déterminer préalablement cet objectif et peut s'avérer difficile dans le cadre de certaines applications pour lesquelles il est difficile de prévoir avant une mise en fonctionnement réel de l'application quelles doivent être les performances optimales potentiellement garantes de la meilleure qualité de service. Cette variante de l'invention permet donc de déterminer simplement si la sélection de la deuxième valeur du paramètre de configuration permet d'obtenir des performances meilleures ou moins bonnes que celles obtenues avec la première valeur dudit paramètre, et ne requiert pas une prédétermination de performances optimales de l'application.

Dans un mode de mise en oeuvre préféré de cette deuxième variante, la variation dudit paramètre sera alors réalisée dans un sens dépendant d'un sens de variation de résultats de comparaison successives.

Cette deuxième variante de l'invention, lorsqu'elle est utilisée dans le cadre d'une mise en oeuvre par cycles itératifs du procédé selon l'invention, permet donc d'identifier une valeur du paramètre de configuration pour laquelle un maximum sera obtenu pour les performances mesurées.

Diverses méthodes peuvent être utilisées pour quantifier la variation à appliquer au paramètre de configuration au cours d'une étape de réglage. Selon un mode de mise en oeuvre particulier de l'invention, une valeur absolue d'une variation à appliquer à la valeur dudit paramètre lors d'une étape de réglage consécutive à au moins deux étapes de réglage successives est égale à la moitié d'une différence entre les valeurs obtenues pour ledit paramètre à l'issue desdites deux étapes de réglage successives.

Ce mode de mise en oeuvre particulier de l'invention permet d'utiliser une méthode connue de l'homme du métier sous le nom de dichotomie, et permet ainsi d'implémenter l'étape de réglage au moyen d'algorithmes simples et bien maîtrisés.

L'invention concerne également, en tant que moyen pour mettre en oeuvre le procédé décrit plus haut, un dispositif de réglage d'au moins un paramètre de configuration d'une application, lequel dispositif inclut :
. des moyens de sélection d'une première valeur dudit paramètre,
. des moyens de simulation d'un fonctionnement de l'application dans une première configuration résultant de la détermination de la première valeur dudit paramètre, dans des conditions de charge prédéterminées de l'application,
. des moyens de mesure de performances de l'application dans ladite première configuration,
. des moyens de comparaison des performances mesurées avec des valeurs de performance prédéterminées, et
. des moyens de réglage par variation de la valeur dudit paramètre en fonction d'un résultat de ladite comparaison.

Ce dispositif permet un réglage automatique de la valeur d'un paramètre de configuration d'une application en vue d'en optimiser les performances, sans intervention humaine au cours des opérations de réglage et préalablement à toute mise en fonctionnement réel de ladite application.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est un schéma fonctionnel qui représente un dispositif de réglage selon un mode de mise en oeuvre particulier de l'invention,
La Fig.2 est un organigramme qui représente un procédé selon l'invention,
La Fig.3 est une courbe de variation qui représente une évolution possible des performances mesurées en fonction de variations du paramètre de configuration, et
La Fig.4 est un organigramme qui représente un procédé selon une variante de l'invention.

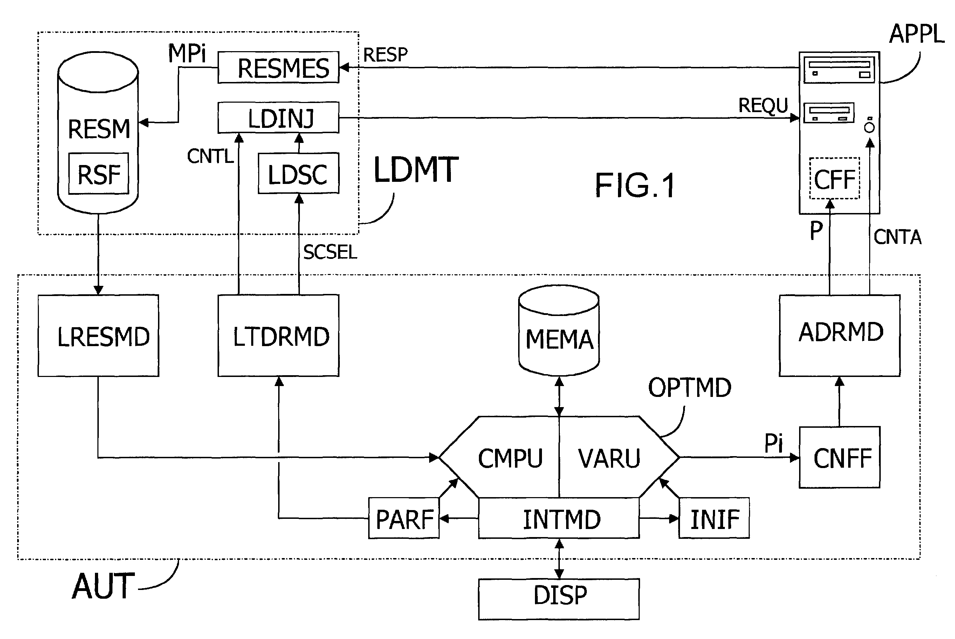

La Fig.1 représente schématiquement un dispositif de réglage d'au moins un paramètre de configuration d'une application APPL, qui pourra être constituée par un système d'exploitation, tel un système Solaris, Unix, Linux, etc., par un serveur Web tel un serveur Apache, Netscape, Resin, Tomcat, etc., par un serveur d'application, tel un serveur Websphere, Weblogic, iPlanet, etc., ou encore par une base de données, telle une base Oracle, Sybase, Versant, etc. (les signes précités pouvant être protégés).

L'application APPL contient un fichier de configuration CFF paramétrable au moyen d'au moins une variable P appelée paramètre de configuration, dont la valeur a une influence déterminante sur des performances de l'application APPL. Par exemple, dans le cas où l'application APPL est un serveur Web Apache, le paramètre P pourra être constitué par des grandeurs "MaxClients", "StartServer", "MinSpareServer", "MaxSpareServer", "KeepAlive", "KeepAliveTimeOut", "TimeOut", ou encore "Max_Keep_Alive_Requests", qui sont des anglicismes propres à cette application et bien connus de l'homme du métier qui est familier avec ce type de serveurs.

Le dispositif de réglage selon l'invention permet d'ajuster de manière automatique la valeur de chaque paramètre de configuration P afin d'optimiser les performances de l'application APPL. De plus, un tel réglage peut être exécuté sans pour autant qu'il soit nécessaire de recourir à une mise en fonctionnement réel de ladite application APPL, c'est-à-dire sans que des utilisateurs de l'application APPL n'aient à subir d'effets négatifs d'ajustements successifs dudit paramètre pouvant se traduire par une dégradation momentanée de la qualité de service à laquelle lesdits utilisateurs sont en droit de prétendre.

A cet effet, le dispositif selon l'invention inclut :
. des moyens de sélection CNFF d'une valeur Pᵢ dudit paramètre P,
. des moyens de simulation (LDSC, LDINJ) d'un fonctionnement de l'application APPL dans une configuration résultant de la sélection de la valeur Pᵢ dudit paramètre P, dans des conditions de charge prédéterminées de l'application APPL,
. des moyens de mesure RESMES de performances MPᵢ de l'application APPL dans ladite configuration,
. des moyens de comparaison CMPU des performances mesurées MPᵢ avec des valeurs de performance prédéterminées, et
. des moyens de réglage par variation VARU de la valeur Pᵢ dudit paramètre P en fonction d'un résultat de ladite comparaison.

Dans le mode de réalisation particulier de l'invention décrit dans cet exemple, le dispositif de réglage inclut :
. un outil de charge et de mesure LDMT, qui inclut les moyens de simulation (LDSC, LDINJ) et de mesure RESMES, et
. un automate AUT, qui inclut les moyens de sélection CNFF et un module d'optimisation OPTMD contenant les moyens de comparaison CMPU et de réglage par variation VARU.

L'automate AUT est destiné à communiquer avec un opérateur du dispositif de réglage via une unité d'affichage DISP et un module d'interface INTMD. L'opérateur pourra ainsi fournir à l'automate AUT des informations à prendre en compte lors du réglage, qui seront par exemple stockées dans un fichier PARF, et recevoir de la part de l'automate AUT un compte-rendu des opérations de réglage à l'issue de celles-ci ou pendant leur déroulement. L'outil de charge et de mesure LDMT est piloté par l'automate AUT via un module de pilotage de charge et de test LTDRMD.

Les informations destinées à être stockées dans le fichier PARF permettent de définir un cadre général dans lequel le réglage du ou des paramètres de configuration est effectué. Ces informations définiront par exemple les conditions de charge qui devront être appliquées à l'application APPL lors d'une étape de simulation. En effet, le résultat d'une optimisation de performances ne sera pas le même pour une application faiblement ou fortement chargée. La charge à laquelle sera soumise l'application APPL sera par exemple définie par un nombre simultané ou un débit prédéterminés de requêtes REQU générées par l'outil de charge et de mesure LDMT, lesquelles requêtes seront de préférence établies conformément à des protocoles couramment répandus, tels les protocoles HTTP, HTTPS, FTP, etc.

Les conditions de charge pourront en outre avantageusement prendre en compte des spécificités de l'application APPL, telles la gestion de pages statiques ou dynamiques, qui produisent des résultats différents en termes d'optimisation.

Les conditions de charge prédéterminées pourront être évolutives dans le temps et former des scénarii de charge qui auront avantageusement été préalablement mémorisés dans un module de stockage de scénarii LDSC, les informations stockées dans le fichier PARF permettant au module de pilotage de charge et de test LTDRMD de sélectionner, au moyen d'un signal de sélection de scénario SCSEL, le scénario qui doit être employé au cours de la simulation. Chaque étape de simulation sera déclenchée par le module de pilotage de charge et de test LTDRMD au moyen d'un premier signal de contrôle CNTL. Le scénario préalablement sélectionné sera alors appliqué à l'application APPL au moyen d'un module dit d'injection de charge LDINJ, qui génèrera les requêtes REQU selon des modalités en termes de nombre, de nature, de débit,... définies par le scénario sélectionné.

Les performances de l'application APPL seront définies par l'aptitude de ladite application APLL à répondre de manière adéquate aux requêtes REQU prévues dans le scénario sélectionné. Les réponses RESP produites par l'application APLL consécutivement à ces requêtes REQU sont ainsi captées par les moyens de mesure RESMES, qui, après les avoir analysées, produiront des mesures des performances MPᵢ offertes par l'application APPL, dans ces conditions de charge prédéterminées, lorsqu'elle est configurée au moyen du paramètre P auquel aura été attribuée une valeur Pᵢ. Les informations stockées dans le fichier PARF permettront en outre avantageusement de définir des critères de mesure destinés à être appliqués lors de l'analyse de ces réponses RESP. Ces critères pourront par exemple être la recherche d'une valeur maximum de débit en ligne, un nombre important de transactions par seconde, ou encore des temps de réponse les plus faibles possibles ou un taux de réussite de transaction le plus élevé possible.

Les moyens de sélection CNFF sont constitués par un fichier contenant au moins un champ inscriptible par le module d'optimisation OPTMD, lequel champ est destiné à contenir la valeur Pᵢ qui doit être attribuée au paramètre de configuration P de l'application APPL. Une telle attribution est réalisée au moyen d'un module de pilotage ADRMD de l'application APPL, lequel module communique avec le fichier de configuration CFF de l'application APPL. Certaines applications sont susceptibles d'inclure plusieurs fichiers de configuration, chacun contenant un ou plusieurs paramètres. Les informations stockées dans le fichier PARF permettront alors d'identifier le fichier de configuration CFF destiné à contenir le paramètre P dont un réglage est recherché.

Au début d'un processus de réglage, une première valeur P₁ est extraite d'un fichier d'initialisation INIF et attribuée au paramètre de configuration P dont le réglage est recherché, via les moyens de sélection CNFF et le module de pilotage ADRMD de l'application APPL. Lorsque le scénario définissant les conditions de charge prédéterminées de l'application APPL a été sélectionné via le fichier PARF, le module de pilotage de charge et de test LTDRMD et le signal de sélection SCSEL, une étape de simulation est déclenchée par l'automate AUT au moyen d'une activation du signal de contrôle CNTL, par exemple en attribuant audit signal un niveau logique "1". L'application APPL est alors également mise en fonctionnement par l'automate AUT au moyen d'une activation d'un deuxième signal de contrôle CNTA fourni par le module de pilotage ADRMD de l'application APPL. Il convient de souligner qu'il ne s'agit pas là d'une mise en fonctionnement réel de l'application APPL, c'est-à-dire que la charge à laquelle est soumise l'application n'est pas produite par des utilisateurs réels du dispositif, mais par l'outil de charge et de test LDMT.

En réaction aux stimuli constitués par les requêtes REQU produites par l'outil de charge et de test LDMT, l'application APPL produit des réponses RESP qui sont analysées par les moyens de mesure RESMES, lesquels produisent des valeurs mesurées MPᵢ des performances de l'application APPL, avec i=1 dans cette première configuration. Ces performances sont mémorisées dans un fichier résultat RSF contenu dans une mémoire de résultats RESM incluse dans cet exemple dans l'outil de charge et de test LDMT, et le contenu de ce fichier résultat RSF est transmis via un module de lecture de résultat LRESMD au module d'optimisation OPTMD inclus dans l'automate AUT.

A l'issue de l'étape de simulation du fonctionnement de l'application APPL dans cette première configuration, les performances mesurées MPᵢ seront comparées par les moyens de comparaison CMPU à des performances prédéterminées préalablement mémorisées dans le fichier PARF. En fonction du résultat de cette comparaison, une variation dPᵢ sera appliquée par les moyens de réglage VARU à la valeur Pᵢ du paramètre de configuration P dont le réglage est recherché. Dans le cas présent, une nouvelle valeur P2=P1+dP1 sera ensuite fournie par le module de pilotage ADRMD de l'application APPL au fichier de configuration CFF de ladite application APPL.

Une nouvelle étape de simulation et une nouvelle étape de mesure pourront alors être exécutées, pour mesurer les performances MP₂ que l'application offre dans cette deuxième configuration où P=P₂.

Dans l'un des modes de mise en oeuvre les plus simples de l'invention, chaque valeur de performances MPᵢ mesurée sera comparée par les moyens de comparaison CMPU aux seules valeurs de performances prédéterminées, un réglage par variation de la valeur Pi du paramètre de configuration étant exécuté à chaque itération, c'est-à-dire à l'issue de chaque étape de comparaison, jusqu'à ce que la valeur des performances mesurées MPᵢ dépasse celle des performances prédéterminées, qui constituent simplement un objectif à atteindre.

Dans d'autres modes de mise en oeuvre de l'invention, les moyens de comparaison CMPU pourront soit, dans une première variante, comparer successivement les performances MP₁ et MP₂ mesurées à l'issue de deux étapes de simulation aux performances prédéterminées imposées par l'opérateur du dispositif et contenues alors dans le fichier PARF, soit, dans une deuxième variante, comparer entre elles les performances MP₁ et MP₂ mesurées à l'issue de deux étapes de simulation, les performances MP₁ ayant dans les deux variantes été préalablement mémorisées dans une mémoire MEMA de l'automate AUT à l'issue de l'étape de simulation précédente.

Dans la première variante, le module d'optimisation OPTMD a donc pour fonction d'identifier si la variation dPᵢ de la valeur Pᵢ du paramètre de configuration P a permis de se rapprocher de l'objectif constitué par les valeurs de performances prédéterminées, et d'en déduire dans quel sens la prochaine variation dPᵢ₊₁ doit être effectuée. Ceci permet d'organiser et donc de simplifier le processus de sélection de la valeur Pᵢ dudit paramètre dans le cadre d'une mise en oeuvre par cycles itératifs du procédé selon l'invention. Le processus itératif s'arrêtera lorsque les performances prédéterminées, qui constituent dans cette première variante un objectif à atteindre, auront effectivement été produites par l'application APPL au cours d'une étape de simulation, la valeur Pᵢ correspondante étant alors retenue pour le paramètre de configuration P.

Dans la deuxième variante, le module d'optimisation OPTMD a simplement pour fonction de déterminer si la sélection de la nouvelle valeur Pᵢ du paramètre de configuration P permet d'obtenir des performances meilleures ou moins bonnes que celles obtenues avec la précédente valeur Pᵢ₋₁ dudit paramètre P, cette variante ayant pour avantage de ne pas nécessiter une prédétermination de performances optimales de l'application. Le processus itératif mis en oeuvre selon cette variante s'arrêtera lorsqu'un nombre M prédéterminé d'itérations aura été atteint, ou encore lorsqu'une différence entre deux mesures de performances successives deviendra inférieure à une valeur de seuil prédéterminée, ou encore lorsque une variation dPᵢ à appliquer à une valeur Pᵢ du paramètre de configuration P sera inférieure à une valeur de seuil prédéterminée, ce qui signifiera en principe dans les deux derniers cas qu'un maximum de performances aura été atteint pour la valeur Pᵢ considérée, qui sera alors retenue pour le paramètre de configuration P.

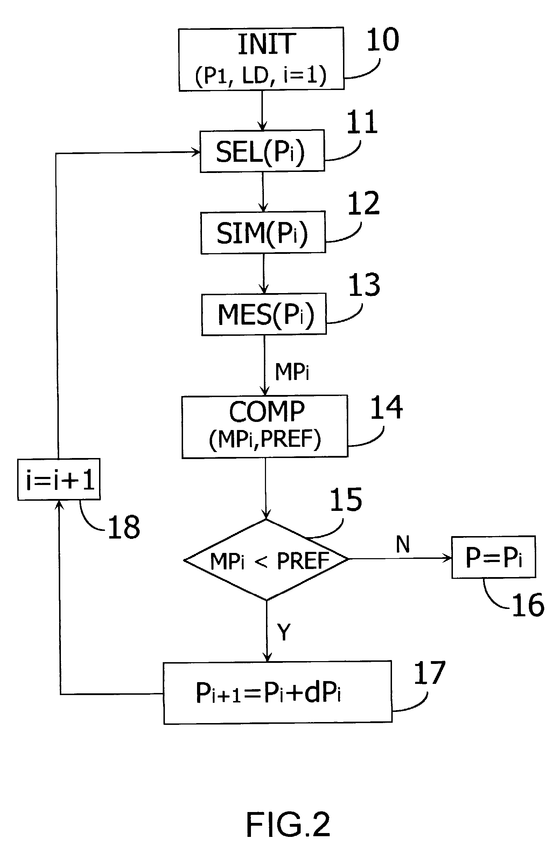

La Fig.2 illustre un procédé de réglage conforme à un mode de mise en oeuvre très simple de l'invention. Ce procédé inclut une étape 10 d'initialisation, au cours de laquelle l'opérateur définit le paramètre de configuration P dont il souhaite effectuer un réglage, les conditions de fonctionnement LD dans lesquelles ce réglage doit être effectué, et des performances PREF qu'il aura jugées optimales dans ces conditions de charge et qui constitueront un objectif de performances à atteindre. L'opérateur définira également une valeur initiale P₁ dudit paramètre de configuration, ainsi qu'un écart dPᵢ définissant une amplitude de variation à appliquer à différentes valeurs successives Pᵢ. Un compteur permettant un suivi de la valeur d'un indice de boucle i est en outre initialisé à 1. Au cours d'une étape suivante 11 dite de sélection, la valeur P₁ est attribuée au paramètre de configuration P puisque i=1. Au cours d'une étape suivante 12, dite de simulation, le fonctionnement de l'application est simulé dans une configuration résultant de la sélection de la valeur Pᵢ du paramètre de configuration P, dans les conditions de fonctionnement LD prédéterminées. Au cours d'une étape suivante 13, dite de mesure, les performances MPᵢ produites par l'application dans ladite configuration résultant de la sélection de la valeur Pᵢ sont mesurées, et, optionnellement, mémorisées. Au cours d'une étape suivante 14, dite de comparaison, les performances mesurées MPᵢ sont comparées aux performances prédéterminées PREF. Une étape de test 15 permet de déterminer si les performances mesurées MPᵢ sont supérieures ou égales aux performances prédéterminées PREF, auquel cas le déroulement du procédé peut être conclu lors d'une étape finale 16 au cours de laquelle la valeur courante Pᵢ qui a permis d'obtenir les performances MPᵢ est retenue aux fins d'attribution au paramètre de configuration P pour la mise en fonctionnement réél de l'application considérée. S'il ressort de l'étape de test 15 que les performances mesurées MPᵢ sont inférieures à l'objectif constitué par les performances prédéterminées PREF, une nouvelle valeur Pᵢ₊₁ est calculée au cours d'une étape de réglage par variation 17 en faisant varier la valeur Pᵢ d'un écart dPᵢ. Au cours d'une étape suivante 18, le compteur contenant la valeur de i est incrémenté, de sorte que i=i+1, et un nouveau cycle d'étapes 11, 12, 13, 14 et 15 est déclenché.

Le procédé décrit ci-dessus peut donc être mis en oeuvre pour effectuer un réglage du paramètre de configuration P. Dans un autre mode de mise en oeuvre, ce procédé peut également être utilisé en tant simplement que moyen de mesure et de comparaison de performances dans différentes configurations, afin de rechercher une zone particulière de variation du paramètre de configuration P au sein de laquelle une valeur maximale de performances peut être obtenue, sans identifier précisément des coordonnées d'un tel maximum. Ce mode de mise en oeuvre est utile lorsque la courbe de variation présente plusieurs maxima locaux, car il permet d'identifier de façon approximative et sans nécessiter un volume de calculs trop important un intervalle de variation de largeur réduite par rapport à l'ensemble de la plage de variation du paramètre de configuration, intervalle au sein duquel une méthode de recherche plus précise de maximum, et donc plus exigeante en termes de ressources de calcul, pourra alors être employée. Dans cet autre mode de mise en oeuvre, les étapes 15 et 16 pourront être supprimées, les étapes 11, 12, 13, 14, 17 et 18 étant enchaînées de façon cyclique jusqu'à ce que i atteigne une valeur prédéterminée au cours de l'étape d'initialisation 10, chaque résultat de mesure MPᵢ étant mémorisé à l'issue de l'étape de mesure 13 correspondante.

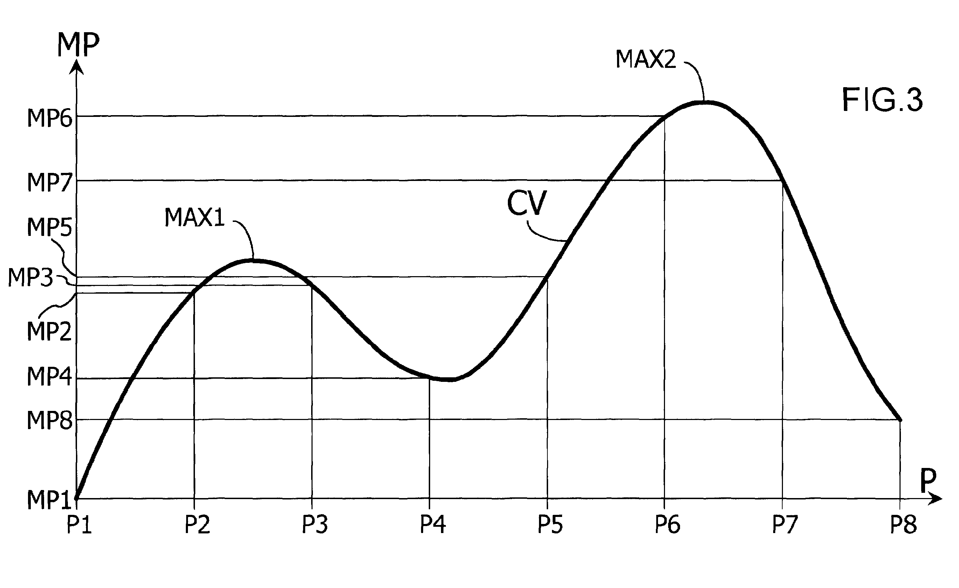

La Fig.3 représente une courbe de variation CV qui rend compte de l'évolution réelle des performances mesurées MP de l'application en fonction de la valeur du paramètre de configuration P. Le procédé décrit ci-dessus a permis de mesurer et de mémoriser des valeurs de performances MPi pour diverses valeurs Pi (avec i=1 à 8 dans cet exemple) sélectionnées pour le paramètre de configuration P. Une analyse des valeurs MPi mémorisées permet d'identifier des premier et deuxième maxima locaux de performances MAX1 et MAX2, obtenus pour des valeurs du paramètre de configuration P respectivement situées dans un premier et un deuxième intervalle [P2; P3] et [P6 ; P7]. Le mode de mise en oeuvre du procédé décrit ci-dessus permet donc de restreindre la recherche d'un maximum absolu de performances au seul intervalle [P6 ; P7], et donc de réduire ainsi le volume de calcul nécessaire à l'identification de la valeur du paramètre de configuration qui permettra effectivement d'obtenir des performances maximales MAX2 de l'application dans les conditions de fonctionnement prédéterminées.

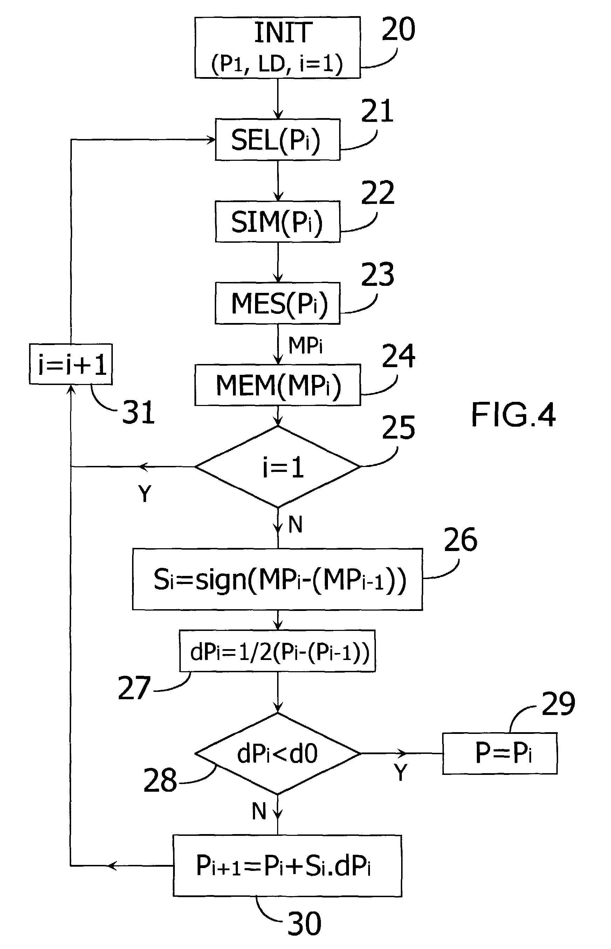

La Fig.4 illustre un procédé de réglage conforme à la deuxième variante de l'invention évoquée plus haut. Ce procédé peut-être mis en oeuvre soit isolément, c'est-à-dire sans mener de recherche préalable d'un intervalle de variation du paramètre de configuration au sein duquel apparaît la valeur maximale de performances de l'application dans ses conditions de fonctionnement prédéterminées, soit à la suite de la mise en oeuvre du procédé décrit ci-dessus, qui permet une identification d'un tel intervalle, et donc une réduction du volume de calcul nécessaire à l'identification de la valeur du paramètre de configuration P qui permet d'obtenir ces performances maximales. Dans l'exemple de mise en oeuvre de l'invention décrit ici, on supposera qu'un tel intervalle a déjà été identifié grâce au procédé décrit plus haut. Le procédé de réglage selon cette deuxième variante de l'invention inclut une étape 20 d'initialisation, au cours de laquelle des bornes inférieures et supérieures de l'intervalle dans lequel un maximum de performances est recherché sont attribuées à de nouvelles valeurs initiales successives P₁ et P₂ du paramètre de configuration, c'est-à-dire dans le cas de figure décrit ici les valeurs portant les labels P6 et P7 dans la Fig.3. Un compteur permettant un suivi de la valeur d'un indice de boucle i est en outre initialisé à 1. Au cours d'une étape suivante 21 dite de sélection, la valeur P₁ est attribuée au paramètre de configuration P puisque i=1. Au cours d'une étape suivante 22, dite de simulation, le fonctionnement de l'application est simulé dans une configuration résultant de la sélection de la valeur Pᵢ du paramètre de configuration P, dans les conditions de fonctionnement LD prédéterminées. Au cours d'une étape suivante 23, dite de mesure, les performances MPᵢ produites par l'application dans ladite configuration résultant de la sélection de la valeur Pᵢ sont mesurées, et, au cours d'une étape suivante 24, ces performances MPᵢ sont mémorisées. Au cours d'une première étape de test 25, la valeur de i est analysée. Si i=1, un nouvel enchaînement d'étapes 21, 22, 23 et 24 est déclenché après avoir incrémenté la valeur i contenue dans le compteur au cours d'une étape d'incrémentation 31, de manière à mémoriser au moins deux mesures de performances successives MPᵢ₋₁ et MPᵢ obtenues pour deux valeurs successives Pᵢ₋₁ et Pᵢ, c'est-à-dire par exemple des valeurs MP₁ et MP₂ obtenues à l'issue des deux premiers cycles pour les valeurs initiales successives P₁ et P₂. S'il est établi, à l'issue de la première étape de test 25, qu'au moins deux valeurs MPᵢ₋₁ et MPᵢ ont été mesurées et mémorisées, le signe Sᵢ d'une différence entre lesdites valeurs est calculé au cours d'une étape suivante 26, sauf le signe S₂ qui aura été choisi négatif (S₂=-1) au cours de l'étape d'initialisation. Ce signe Sᵢ est représentatif du signe d'une tangente à la courbe d'évolution décrite plus haut. Si ce signe est positif (Sᵢ=+1), cela signifie que le maximum de performances sera obtenu pour une valeur Pᵢ₊₁ supérieure à la valeur Pᵢ. Si le signe Sᵢ est négatif, cela signifie que le maximum sera obtenu pour une valeur Pᵢ₊₁ inférieure à la valeur Pᵢ. Au cours d'une étape suivante 27, une variation dPᵢ sera alors calculée, dont la valeur absolue sera dans cet exemple égale à la moitié d'une différence entre les valeurs Pᵢ et Pᵢ₋₁. Cette définition de la valeur absolue de la variation dPᵢ correspond à l'application d'une méthode dichotomique classique et bien connue de l'homme du métier. Au cours d'une deuxième étape de test 28, la valeur absolue de l'écart dPᵢ ainsi calculée est comparée à un écart minimum d0 préalablement défini par l'opérateur. Si l'écart dPᵢ calculé au cours de l'étape 27 est inférieur à l'écart minimum d0, cet écart sera considéré comme insignifiant en ce sens qu'il ne permettra pas un accroissement significatif des performances de l'application, auquel cas le déroulement du procédé peut être conclu lors d'une étape finale 29 au cours de laquelle la valeur courante Pᵢ est retenue aux fins d'attribution au paramètre de configuration P pour la mise en fonctionnement réél de l'application considérée, en tant que valeur permettant l'obtention de performances extrêmement proches des performances maximales de ladite application. Si, par contre, l'écart dPᵢ calculé au cours de l'étape 27 est supérieur ou égal à l'écart minimum d0, une variation correspondante sera appliquée à la valeur courante Pᵢ pour obtenir la valeur suivante Pᵢ₊₁, au cours d'une étape de réglage 30 de la valeur du paramètre de configuration, le sens de la variation étant déterminé par le signe Sᵢ précédemment calculé. Au cours d'une étape suivante 31, le compteur contenant la valeur de i est incrémenté, de sorte que i=i+1, et un nouveau cycle d'étapes 21, 22, 23, 24, 25, 26, 27 et 28 est déclenché.

Dans un autre mode de mise en oeuvre de cette deuxième variante de l'invention, on pourra choisir un nombre maximum M d'itérations de cycles d'étapes 21, 22, 23, 24, 25, 26, 27 et 28, et comparer au cours de la deuxième étape de test 28 la valeur courante de l'indice de boucle i à la valeur M, une égalité entre i et M entraînant alors une conclusion du déroulement du procédé au moyen de l'étape finale 29.

Il apparaît donc de la description qui précède que l'invention permet une optimisation des performances d'une application, laquelle optimisation peut être exécutée de façon automatique et sans mettre à contribution des utilisateurs de ladite application, en mettant en oeuvre une boucle de rétroaction autorisant une simulation du fonctionnement de ladite application, une mesure des performances produites par ladite application lors de ladite simulation, et un réglage d'au moins un paramètre de configuration de ladite application en fonction des performances ainsi mesurées.

Dans les exemples de mise en oeuvre de l'invention décrits précédemment, un seul paramètre de configuration a fait l'objet d'un réglage. Nombre d'applications possèdent plusieurs paramètres de configuration, à l'instar du serveur Web Apache évoqué plus haut. Ces paramètres pourront être réglés successivement, le réglage de chaque paramètre étant alors avantageusement réalisé selon les modes de mise en oeuvre de l'invention décrits ci-dessus. Le réglage de plusieurs paramètres de configuration sera de préférence réalisé comme suit :
Au cours d'une étape d'initialisation, un opérateur définira une valeur de configuration prédéterminée pour chaque paramètre de configuration dont un réglage permettant d'obtenir un maximum de performances de l'application considérée est recherché.
Au cours d'une première passe, une zone de variation de chaque paramètre sera identifiée, dans laquelle un maximum de performances de l'application est obtenu, ceci alors que les autres paramètres sont maintenus à leur valeur de configuration prédéterminée.
Au cours d'une deuxième passe, chaque paramètre fera l'objet d'un premier réglage au moyen d'un procédé de recherche de maximum semblable par exemple à celui décrit en Fig.4. Cette deuxième passe sera réalisée dans un certain ordre, qui peut être défini comme suit : pour obtenir une première valeur de réglage d'un premier paramètre, les autres paramètres sont maintenus à leurs valeurs de configuration prédéterminées. Pour obtenir une première valeur de réglage du deuxième paramètre, le premier paramètre se verra attribuer la première valeur de réglage ainsi obtenue, tandis que les autres paramètres conserveront leurs valeurs de configuration prédéterminées. Pour obtenir une première valeur de réglage du troisième paramètre, les premières valeurs de réglage des premier et deuxième paramètres seront attribuées auxdits paramètres, tandis que les autres paramètres conserveront leurs valeurs de configuration prédéterminées, et ainsi de suite jusqu'au dernier paramètre de configuration, dont une première valeur de réglage sera obtenue alors que tous les autres paramètres auront pour valeurs leurs premières valeurs de réglage obtenues au cours de cette deuxième passe.
Au cours d'une troisième passe, chaque paramètre, à l'exception du dernier, fera l'objet d'un deuxième réglage au moyen d'un procédé de recherche de maximum semblable par exemple à celui décrit en Fig.4. Cette troisième passe sera réalisée dans un ordre inverse à celui utilisé pour la deuxième passe, c'est-à-dire que pour obtenir une deuxième valeur de réglage de l'avant-dernier paramètre, le dernier paramètre se verra attribuer sa première valeur de réglage, qui constituera également sa deuxième valeur de réglage, les autres paramètres conservant leur première valeur de réglage. Pour obtenir une deuxième valeur de réglage de l'avant-avant-dernier paramètre, les deuxièmes valeurs de réglage des dernier et avant-dernier paramètres seront attribuées auxdits paramètres, tandis que les autres paramètres conserveront leurs premières valeurs de réglage, et ainsi de suite jusqu'au premier paramètre de configuration, dont une deuxième valeur de réglage sera obtenue alors que tous les autres paramètres auront pour valeurs leurs deuxièmes valeurs de réglage obtenues au cours de cette troisième passe.

Un tel procédé en trois passes permet d'obtenir un réglage quasi-optimum de l'ensemble des paramètres de configuration d'une application qui en possède plusieurs, au prix d'un volume de calcul acceptable.

Dans d'autres modes de mise en oeuvre de l'invention, on pourra mesurer les performances de l'application pour chaque combinaison possible de toutes les valeurs possibles du paramètre de configuration, ce qui permettra d'identifier la meilleure combinaison possible de valeurs des divers paramètres de configuration, qui sera celle qui aura permis d'obtenir les performances les plus élevées. Un tel mode de mise en oeuvre requiert cependant une puissance de calcul considérable.

Il est à l'inverse tout-à-fait envisageable de n'utiliser que la première passe, ou une combinaison des première et deuxième passes dans des cas où un réglage précis de tous les paramètres de configuration en corrélation les uns avec les autres est moins crucial.

## Revendications

1. Procédé de réglage d'au moins un paramètre de configuration d'une application, lequel procédé inclut au moins :
. une étape de sélection d'une première valeur dudit paramètre,
. une étape de simulation d'un fonctionnement de l'application dans une première configuration résultant de la sélection de la première valeur dudit paramètre, dans des conditions de charge prédéterminées de l'application,
. une étape de mesure de performances de l'application dans ladite première configuration,
. une étape de comparaison des performances mesurées avec des valeurs de performance prédéterminées, et
. une étape de réglage par variation de la valeur dudit paramètre en fonction d'un résultat de ladite comparaison.

2. Procédé de réglage selon la revendication 1, **caractérisé en ce qu'**il inclut en outre, insérées à la suite d'une première étape de réglage :
. une étape de simulation d'un fonctionnement de l'application dans une deuxième configuration résultant de la variation de la valeur dudit paramètre, dans les conditions de charge prédéterminées de l'application,
. une étape de mesure de performances de l'application dans ladite deuxième configuration,
. une étape de comparaison des performances mesurées dans ladite deuxième configuration avec les valeurs de performance prédéterminées, et
. une étape de réglage par variation de la valeur dudit paramètre en fonction d'un résultat de ladite comparaison, la variation dudit paramètre étant réalisée dans un sens dépendant d'un sens de variation de résultats de comparaisons successives.

3. Procédé de réglage selon la revendication 1, **caractérisé en ce qu'**il inclut en outre, insérées à la suite de l'étape de mesure de performances de l'application dans ladite première configuration :
. une étape de sélection d'une deuxième valeur dudit paramètre, et
. une étape de simulation d'un fonctionnement de l'application dans une deuxième configuration résultant de la sélection de la deuxième valeur dudit paramètre, dans les conditions de charge prédéterminées de l'application,
. les valeurs de performances prédéterminées auxquels les performances mesurées dans la deuxième configuration doivent être comparées au cours de l'étape de comparaison étant matérialisées par les performances mesurées dans la première configuration.

4. Procédé de réglage selon la revendication 3, **caractérisé en ce que** la variation dudit paramètre est réalisée dans un sens dépendant d'un sens de variation de résultats de comparaison successives.

5. Procédé de réglage selon l'une des revendications 1 à 4, **caractérisé en ce qu'**une valeur absolue de la variation à appliquer à la valeur dudit paramètre lors d'une étape de réglage consécutive à au moins deux étapes de réglage successives est égale à la moitié d'une différence entre les valeurs obtenues pour ledit paramètre à l'issue desdites deux étapes de réglage successives.

6. Dispositif de réglage d'au moins un paramètre de configuration d'une application, lequel dispositif inclut :
. des moyens de sélection d'une première valeur dudit paramètre,
. des moyens de simulation d'un fonctionnement de l'application dans une première configuration résultant de la détermination de la première valeur dudit paramètre, dans des conditions de charge prédéterminées de l'application,
. des moyens de mesure de performances de l'application dans ladite première configuration,
. des moyens de comparaison des performances mesurées avec des valeurs de performance prédéterminées, et
. des moyens de réglage par variation de la valeur dudit paramètre en fonction d'un résultat de ladite comparaison.
